# EUROPEAN PATENT APPLICATION

(11) **EP 0 538 860 A2**
(43) Date of publication of application: **28.04.1993**
(21) Application number: 92118097.2
(22) Date of filing: 22.10.1992
(51) Int. Cl.: G06F 9/44

(54) **A software developing device and a software developing method**

(30) Priority: 22.10.1991 JP 273710/91
(71) Applicant: FUJITSU LIMITED, Kawasaki-shi, Kanagawa 211 (JP)
(72) Inventor: Shigeki, Nakashima, c/o Fujitsu Limited, Kwasaki-shi, Kanagawa, 211 (JP)
(74) Representative: Schmidt-Evers, Jürgen, Dipl.-Ing.

(57) **Abstract**

The present invention creates a server class (13) and a client class (14) separately. The server class (13) defines the values of data items in a common table (11) used by plural sets of software to be developed, while the client class (14) refers to the values of the data items. An invalid server class or client class is prohibited from being included in the software not authorized to access the common table (11) by restricting the reading authorization of a server header (17) assigned to a server group and of a client header (18) assigned to a client group.

## Description

### Background of the Invention

The present invention relates to a software developing technology based on an object-oriented language, and more specifically to a software developing device and a software developing method used by a number of developers for developing software through which a common table for providing an interface capable of transmitting control information among plural sets of software or among plural software modules in a single set of software can be updated and referred to.

In conventional software development, a "common table method" has been popularly used to obtain an interface between plural sets of software or between plural software modules in a single set of software. The common table refers to a storage area used mainly for transmitting control information between plural sets of software or between plural software modules in a single set of software, and stores various data items such as control information, etc. required to execute the software.

To prevent faults caused by the malfunction of software and to improve the reliability of the software, it is demanded that control information should be correctly stored in a common table, and that software should be developed by a limited number of software developers authorized to access the common table.

In this case, the update of the common table by unauthorized users other than the administrator must be strictly prohibited.

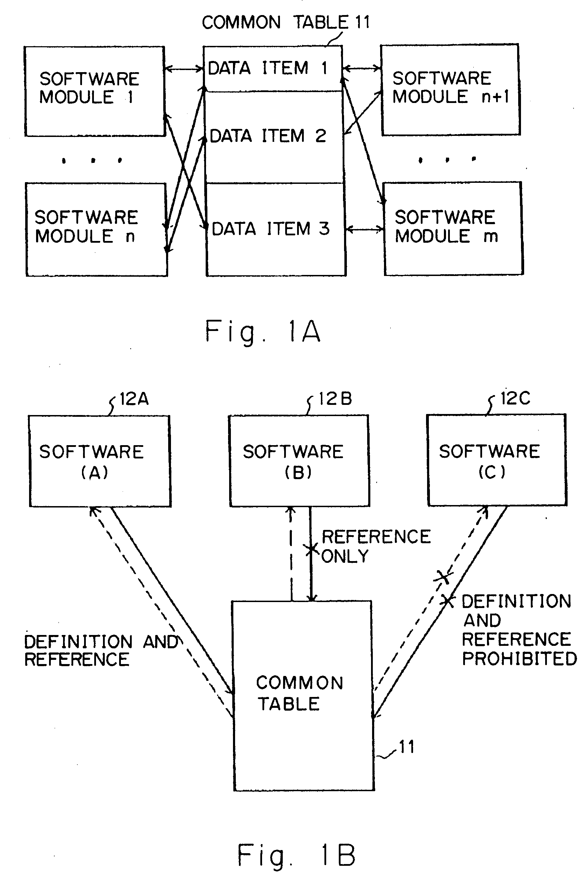

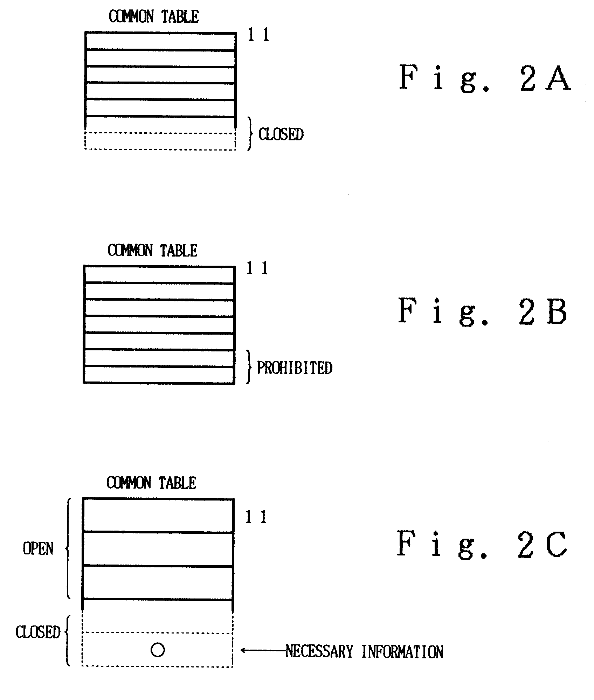

Figures 1 and 2 are explanatory views of the conventional software developing device.

As shown in Figure 1A, in developing a set of software, a developer uses a common table 11 to create each software module so that each of the software modules forming one set of software may be operated by updating or referring to the data items in the common table 11. The content, position, or size of each data item in the common table 11 is preliminarily presented in the form of a table specification, for example, to software developers who utilize the common table 11.

As shown in Figure 1B, in the common table 11, software 12a may require definition (including update) and reference to values, software 12b may only require reference to values, and software 12C may require neither definition nor reference to values.

Thus, conventionally, specific data in the common table 11 which must not be accidentally updated by unauthorized developers as shown in Figure 2A is accessible only by authorized developers, but not by other developers, thereby preventing an accidental update.

As the software developing processes go on, software may not require the update of closed data items but may require the reference to them as shown in Figure 2C. In this case, the closed data items may have to be individually provided for the developers who need them, or may have to be open to all developers. However, if data items are open only to be referred to, they can be updated maliciously or erroneously.

Thus, data items cannot be appropriately transacted in the conventional way to limit the operation to either update or reference only by setting data items to open or not open.

Besides, conventionally, data items are limited to be referred to or to be updated by adding a note to a specific data item in the specification indicating that the specific data item is prohibited as shown in Figure 2B.

However, only adding to the specification a note indicating the prohibition cannot eliminate the possibility that a specific data item can be updated maliciously or erroneously.

Conventionally, as described above, there were no appropriate software developing technologies to prohibit invalid access to the common table 11.

There is a method of controlling access to the common table 11 by recognizing during the execution of developed software, not during the development of the software, an identifier for identifying software or a security level predetermined for the software. However, if software to be developed is merged into a single load module, or if plural sets of software which access the common table 11 are operated at the same security level, there is the problem that access authorization cannot be controlled for a specific item in the common table 11 during the execution of such software.

### Summary of the Invention

The present invention has been developed based on the above described background. It aims at preventing users not authorized to access a common table 11 from accidentally updating and referring to it, and at successfully developing reliable software.

The present invention relates to a software developing device for developing software using an object-oriented language having a class concept. The invention comprises a class storing unit for storing a plurality of classes for defining and referring to data items in a common table accessed by plural sets of software to be developed, and a procedure of accessing the data items, each of the classes being provided according to the type of the data items and the type of the accessing procedure, an including unit for including in the software to be developed the classes stored in the class storing unit, and a managing unit for permitting the software to be developed to include during the including operation only classes which the software is authorized to access among the classes stored in the class storing unit.

With the above configuration, only the developers authorized to access the common table are permitted to define (update) or refer to the data items in the common table. Therefore, since those who are not authorized to use the common table cannot update or refer to the common table, accidental update or reference by unauthorized developers can be prevented, thereby improving the reliability of the software operated through the common table.

Additionally, even if an invalid access to the common table has actually arisen, although a server class for defining a value in a common table or a client class for referring to a value in a common table is closed to unauthorized developers according to a security function, the erroneous program can be located and the cause of the error can be easily detected by searching programs which use the server class or the client class.

Another feature of the present invention resides in a software developing device for developing software using an object-oriented language having a class concept and provided with a resource managing unit having a security function for the data resources of a computer system, comprising a server class for defining the values in a common table shared by plural sets of software to be developed, a client class for referring to a value in the common table defined by the server class, a server header for covering the server classes selectively included in the software to be developed, and a client header for covering the client classes selectively included in the software to be developed, wherein software not authorized to access a common table is prohibited from invalidly including the server class or client class by managing through the resource managing unit data resources containing the server header or the client header.

That is, the software developing device comprising the resource managing unit automatically prevents an unauthorized user from invalidly including a server class or a client class.

A further feature of the present invention resides in a software developing method for developing software by a software developing device using an object-oriented language having a class concept, comprising the steps of separately creating a server class for defining values in a common table used by plural sets of software to be developed and a client class for referring to values defined by the server class, classifying the server classes and the client classes according to the access authorization level for defining or referring to values whichever is necessary in the table class, and assigning to each group a server header and a client header, and setting the server header and the client header to "open" or "closed" for each set of software.

That is, without the resource managing unit, an unauthorized user is prevented from invalidly including those classes not automatically, but on an open or closed basis.

Namely, a still feature of the present invention relates to a software developing method for developing software using an object-oriented language having a class concept by a software developing device provided with a resource managing unit having a security function for the data resources of a computer system, comprising the steps of separately creating a server class for defining values in a common table used by plural sets of software to be developed and a client class for referring to values defined by the server class, permitting software to be developed and authorized to define values in the common table to include the server class by managing through the resource managing unit the data resources containing the server header covering the server classes, and permitting software to be developed and authorized to refer to the value in the common table to include the client class by managing through the resource managing unit the data resources containing the client header covering the client classes.

That is, the software developing device comprising the resource managing unit automatically permits only an authorized user to include a server class or a client class.

### Brief Description of the Drawings

The objects and features of the present invention can be easily recognized by referring to the attached drawings and the preferred embodiments described in this specification.
Figures 1A and 1B show the prior art technology;
Figures 2A through 2C show the prior art technology;
Figure 3 shows the configuration of an embodiment of the present invention;
Figure 4 is a view for explaining the operation of an embodiment of the present invention;
Figures 5A and 5B show the concept of the server and client classes of an embodiment of the present invention;
Figure 6 shows an example of the server header of an embodiment of the present invention;
Figure 7 shows an example of the client header according to an embodiment of the present invention;
Figures 8A through 8C show examples of the software to be developed according to an embodiment of the present invention;
Figures 9A through 9D are views for explaining access authorization according to an embodiment of the present invention; and
Figures 10A and 10B show the restriction on access authorization according to an embodiment of the present invention.

### Description of the Preferred Embodiment

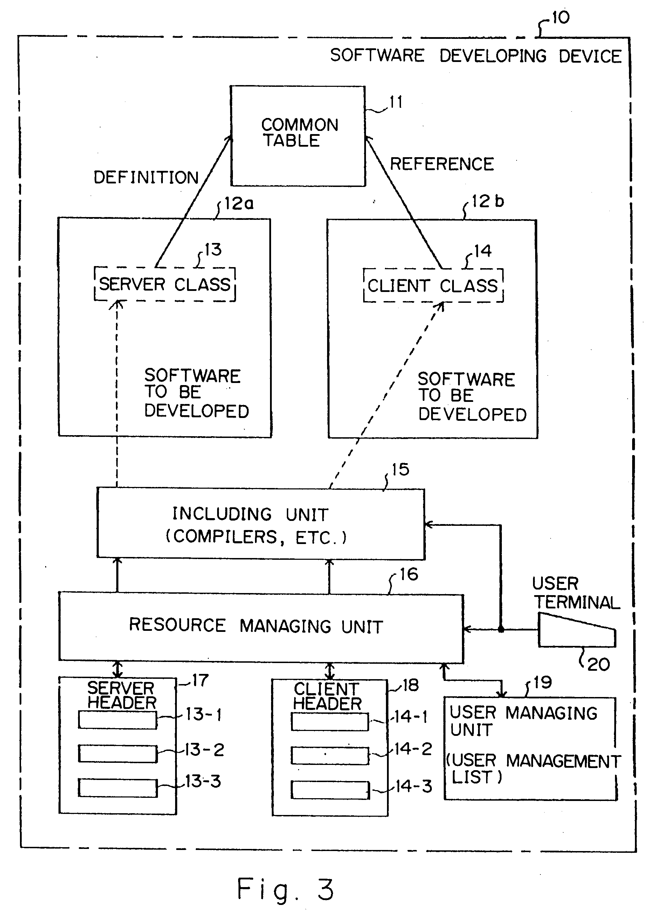

Figure 3 shows the configuration of an embodiment of the present invention.

In Figure 3, a software developing device 10 comprises a CPU, a memory, an auxiliary disk unit, a terminal, etc.

The common table 11 can be accessed by software 12a and 12b to be developed through an object-oriented language.

Software 12a to be developed can include a data structure referred to as a server class 13, while software 12b to be developed can include a data structure referred to as a client class 14.

An including unit 15 includes into software 12a and 12b to be developed through a resource managing unit 16 a server header 17 for including all server classes 13 (13-1, 13-2, ...) according to the instructions from a user terminal 20, or a client header 18 for including all client classes 14 (14-1, 14-2, ...) respectively. The server header 17 and the client header 18 are stored by the disk storage unit or a main storage unit, etc.

The resource managing unit 16 restricts the inclusion of the server header 17 or the client header 18 into software 12a or 12b by referring to a user managing unit 19 for managing a user management list according to user information inputted through the user terminal 20.

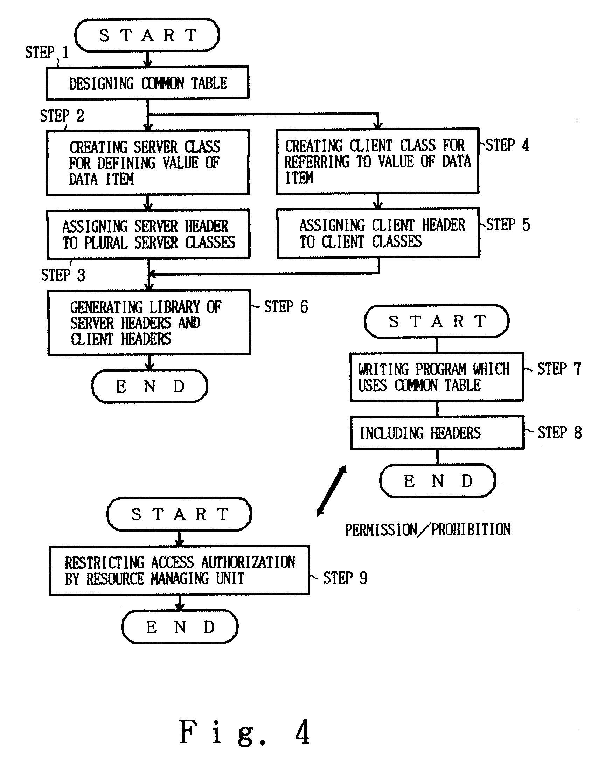

Figure 4 is an operational flowchart for explaining the process flow of an embodiment of the present invention having the configuration shown in Figure 3. Steps 1 - 6 are processes performed by an administrator of the software development device 10; steps 7 and 8 are software developing processes performed by developers; and step 9 is a control process of the software development device 10.

Step 1: First, the administrator of the software developing device 10 designs a common table 11 used by plural sets of software. In designing the common table 11, the semantic content, position and size, etc. of each data item in the common table 11 are determined.

Step 2: The administrator of the software developing device 10 creates depending on the variations of data items a plurality of server classes 13 for defining and updating the values of data items in the common table 11.

Step 3: The administrator of the software developing device 10 classifies a plurality of the created server classes 13 into a plurality of groups of server classes based on access authorization levels, and then assigns a server header 17 for each group of server classes 13.

Step 4: In addition to the server classes 13, the administrator of the software developing device 10 creates depending on the variations of data items a plurality of client classes 14 for referring to the values of data items in the common table 11.

Step 5: The administrator of the software developing device 10 classifies the created client classes 14 into a plurality of groups of client classes based on access authorization levels, and then assigns a client header 18 for each group of client classes 14.

Step 6: The administrator of the software developing device 10 generates a library file for each server header 17 and each client header 18.

Step 7: Each software developer writes a program in which the common table 11 is used. At this time, necessary server classes 13 or client classes 14 are declared for use in the program, and for using these classes, an accessing operation to the common table 11 is described. In this case, the server header 17 including necessary server classes 13 or the client header 18 including necessary client classes 14 is designated to be included in the program.

Step 8: Each software developer activates the including unit 15 to issue a compile instruction to the generated program. According to the instruction, each header is included into a corresponding program by designating a library file for storing the necessary server header 17 or client header 18.

Step 9: The resource managing unit 16 checks the access authorization to a library file based on the user information inputted through the user terminal 20 during the including process of library files performed by the including unit 15. Then, it prohibits the inclusion of the header if invalid access to the common table 11 not authorized for the developer is detected.

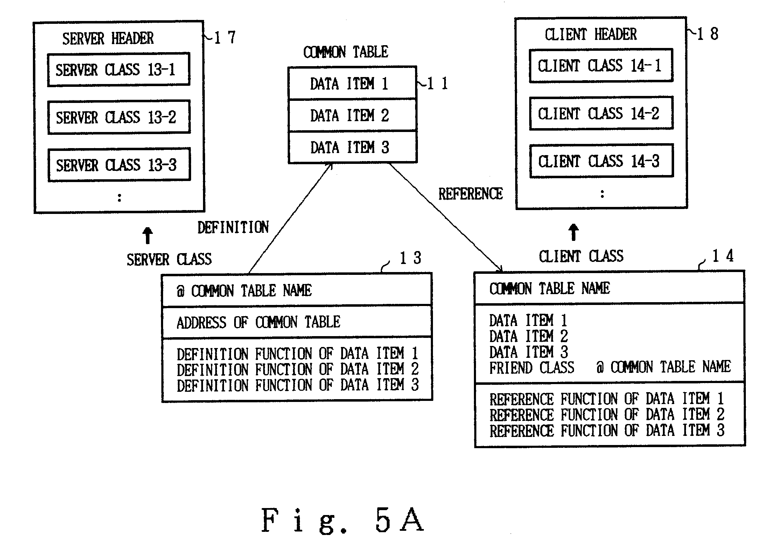

Figure 5A shows an example of the server class 13 and the client class 14 according to an embodiment of the present invention.

As shown in the process flowchart in Figure 4, software 12a and 12b to be developed can access the common table 11 only through a specific data structure called a "server class 13" or a "client class 14".

A "class" refers to a data structure specific to an object-oriented language, and describes a capsule containing data and the procedure to access the data (method or function). The server class 13 and the client class 14 are data structures each describing the procedure to access the common table 11.

First, the server class 13 describes the accessing procedure for defining the value of each data item in the common table 11.

In the example shown in Figure 5A, the standard configuration of server classes 13-1, 13-2, 13-3, ... is represented as the server class 13.

The server class 13 first describes the name "@common table name," and the address information in the common table to be used. Then, it describes a definition function for defining the value of each data item in the common table 11.

With this configuration, the software including the server class 13 defines or updates the value of each data item in the common table 11 through a definition function in a given class.

The above described server class is realized as a plurality of server classes 13-1, 13-2, 13-3, ..., and they are grouped and assigned a server header 17.

The client class 14 describes the accessing procedure for referring to the value of each data item in the common table 11.

The example shown in Figure 5A shows the standard configuration of client classes 14-1, 14-2, 14-3, ... as the client class 14.

The client class 14 describes the name "common table name." In the present embodiment, the name of the server class 13 is preceded by the character @ for comprehensibility which means that the name can be optionally given. Then, data items 1, 2, 3, etc. forming the common table 11 are defined. Additionally, a "friend class @common table name" is described as a special declaration for enabling these data items to be accessed by the server class 13. Then, a reference function for referring to the value of each data item in the common table 11 is described.

With this configuration, the software including the client class 14 refers to the value of each data item in the common table 11 through a reference function in a given class.

The above described client class is realized as a plurality of client classes 14-1, 14-2, 14-3, ..., and they are grouped and assigned a client header 18.

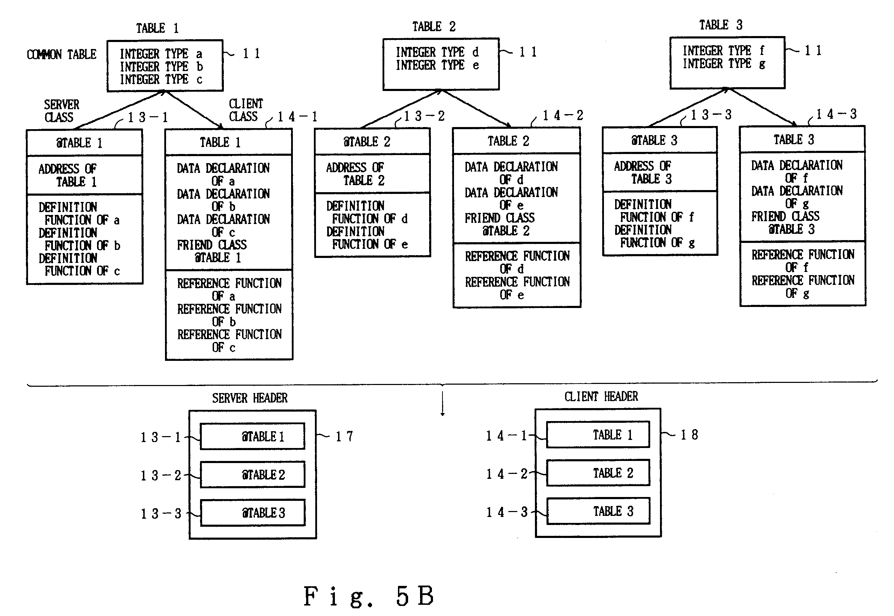

As shown in Figures 4 and 5, when each developer develops software 12a or 12b to be developed (refer to Figure 3), he or she can obtain the function of accessing the common table 11 from the software only by including into the software through the including unit 15 such as a compiler, linker, etc. the server header 17 including the desired server class 13 or the client header 18 containing the desired client class 14.

If each developer tries to include the server header 17 or the client header 18 into software 12a or 12b to be developed, the resource managing unit 16 checks whether or not he or she is permitted to include the server header 17 or the client header 18 into software 12a or 12b to be developed. If not, the inclusion is disabled.

The resource managing unit 16 is normally provided by an operating system, etc. For example, computer data resources are protected by the security function of identifying a user through referring to a user management list, etc. in the user managing unit 19 according to a password inputted by the user.

As a result, the administrator of the common table 11, for example, is permitted to include the server class 13 into software 12a to be developed, and develops software capable of defining the value of each data item in the common table 11. By contrast, a general developer is permitted to include only the client class 14 into software 12b to be developed, and develops the software capable of referring to the value of each data item in the common table 11.

Thus, by setting "open" or "closed" based on the developer level for each of the classes included into software to be developed, the common table 11 can be protected from being developed maliciously or erroneously by general developers.

The preferred embodiments of the present invention is described below by referring to a program written in a well-known C++ language as an object-oriented language. The present invention can also be realized using another object-oriented language.

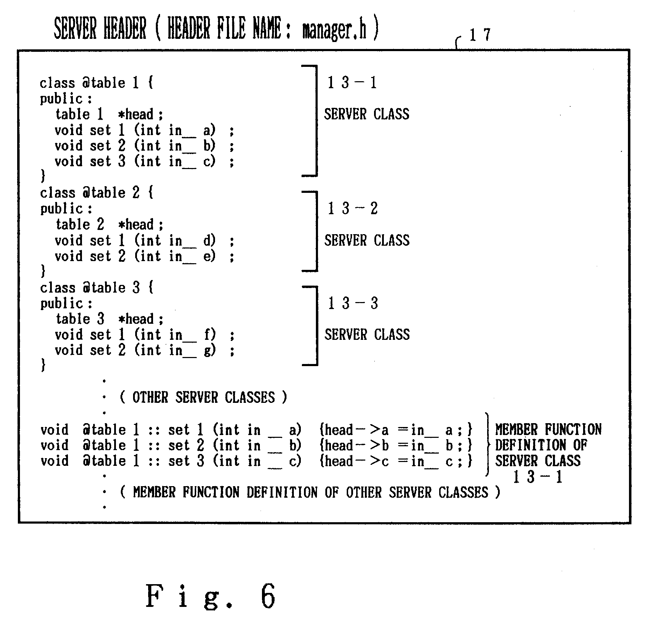

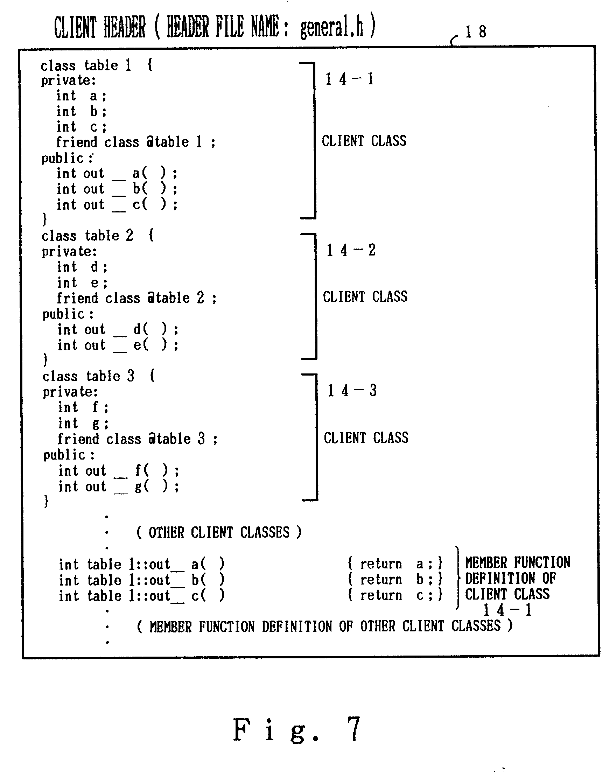

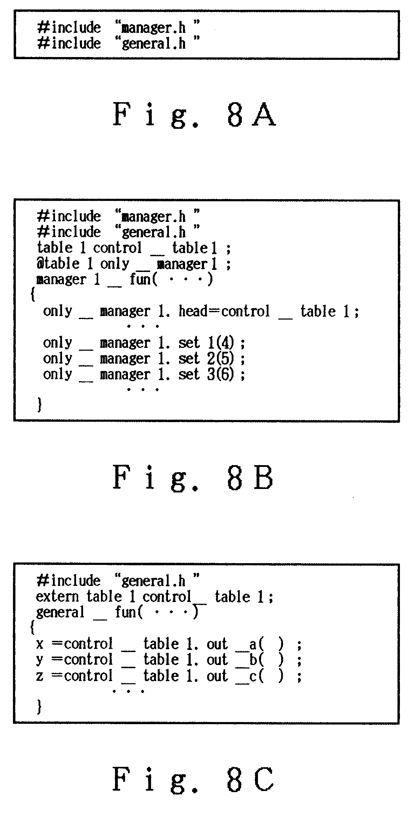

Figure 6 shows an example of encoding the server header 13; Figure 7 shows an example of encoding the client header 14; and Figure 8 shows an example of encoding software 12a or 12b. Figure 8B shows an example of software 12a. Figure 8C shows an example of software 12b.

Figure 5A shows how to create server and client classes when one common table is provided.

If a plurality of common tables are used, server and client classes can be likewise created as shown in Figure 5A.

Figure 5B shows a conceptual view for explaining how to create server and client classes when three common tables are used.

For the common table 1, a server class @tablel and a client class table1 are created by the method shown in Figure 5A. Likewise, for the common table 2, a server class @table2 and a client class table2 are created. In the same way, for the common table 3, a server class @table3 and a client class table3 are created.

The server classes 13 (@table1, @table2, and @table3) are assigned a server header 17, and the client classes 14 (table1, table2, and table3) are assigned a client header 18. The server classes @table1, @table2, and @table3 shown in Figure 5B correspond to server classes 13-1, 13-2 and 13-3 shown in Figure 5A respectively. The client classes table1, table2, and table3 shown in Figure 5B correspond to client classes 14-1, 14-2 and 14-3 shown in Figure 5A respectively.

The server header 17 shown in Figure 6 has a header file name "manager.h" and contains server classes 13-1, 13-2, 13-3, ... .

Server class 13-1 has a class name "@table1" and has functions of defining the values of the common table "table1". The leading address of the common table "table1" is indicated by a pointer variable "head". The class @table1 shown in Figure 6 corresponds to the class name @table1 shown in Figure 5B. The table1 ^{*}head shown in Figure 6 corresponds to the address of table1 shown in Figure 5B.

Values for the data items "a", "b^{"}, and "c" in the common table "table1" can be defined by definition functions "set1", "set2", and "set3" provided as member functions of server class 13-1. That is, using these functions, variables specified by arguments "in_a", "in_b", and "in_c" are defined respectively for the data items "a", "b", and "c" in the common table "table1".

Likewise, server classes 13-2 and 13-3 have class names "@table2" and "@table3" respectively, and have functions of defining the values of the common tables "table2" and "table3" respectively. The void set 1 (int in_a) shown in Figure 6 corresponds to the definition function of "a" shown in Figure 5B.

The client header 18 shown in Figure 7 has a header file name "general.h", and contains client classes 14-1, 14-2, 14-3, ... .

Client class 14-1 has a class name "table1", and has functions of referring to the values of the common table "table1".

First, client class 14-1 defines data items "a", "b", and "c" of an integer type each forming the common table 11. The character string "int" indicates that the attached item has a name of an integer type.

Next, client 14-1 describes a "friend class @table1" as a special declaration for enabling each of the above described data items to be accessed by server class 13-1 shown in Figure 6. The class table 1 shown in Figure 7 corresponds to the class name table 1 shown in Figure 5B and the friend class @table1 shown in Figure 7 corresponds to the friend class @table1 shown in Figure 5B.

The values of the data items "a", "b", and "c" in the common table "table1" are referred to using reference functions "out_a( )", "out_b( )", and "out_c( )" each being provided as a member function of client class 14-1. These functions are used to obtain the values of the data items "a", "b", and "c" in the common table "table1".

Likewise, client classes 14-2 and 14-3 have class names "table2" and "table3" respectively, and have functions of referring to the values of the common tables "table2" and "table3" respectively. Int out_a( ) shown in Figure 7 corresponds to the reference function of "a" shown in Figure 5B.

When the server header 17 shown in Figure 6 and the client header 18 shown in Figure 7 are included in software 12a or 12b, an include statement "#include" shown in Figure 8A is described in the program in software 12a or 12b to be developed.

Figure 8B shows an example of encoding a program in software 12a to be developed by the administrator of the software developing device 10.

In this program, an object "control_table1" of client class table1 14-1 and an object "only_manager1" of server class @table1 13-1 are declared.

Next, the leading address of the object "control_table1" is substituted for the pointer variable "head" of the object "only_manager1" (described later as "only_manager1.head").

Then, member functions "set1" - "set3" for the object "only_manager1" of server class @table1 13-1 are invoked, and the values 4, 5, and 6 are defined for the data items "a", "b", and "c" respectively in the common table "table1".

Figure 8C shows an example of encoding a program in software 12b to be developed by a general developer.

A general developer refers to and fetches the data items "a", "b", and "c" in the object common table "table1" using the object name "control_table1" obtained from the administrator of the software developing device 10 and the member functions "out_a( )" - "out_c( )" of open client class table1 14-1. The fetched values 4, 5, and 6 are substituted for variables "x", "y", and "z" respectively.

Since the means for updating the common table "table1" exists only in the server header "manager h.", an accidental update by unauthorized users such as general developers can be prevented by disabling them from using a server header. A general developer is not permitted to include a server header of the header file name "manager.h". This prevents the value of the common table "table1" from being updated by a program generated by a general developer.

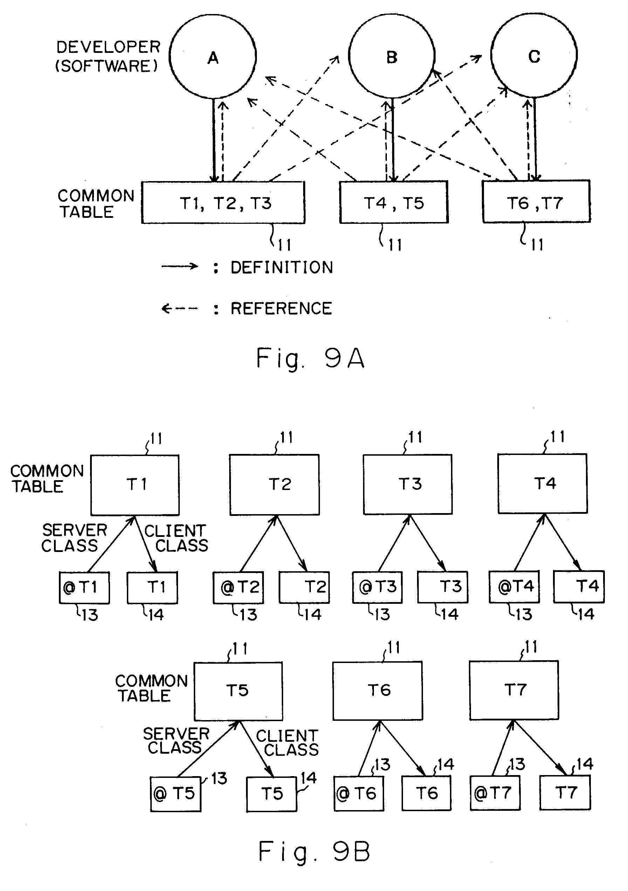

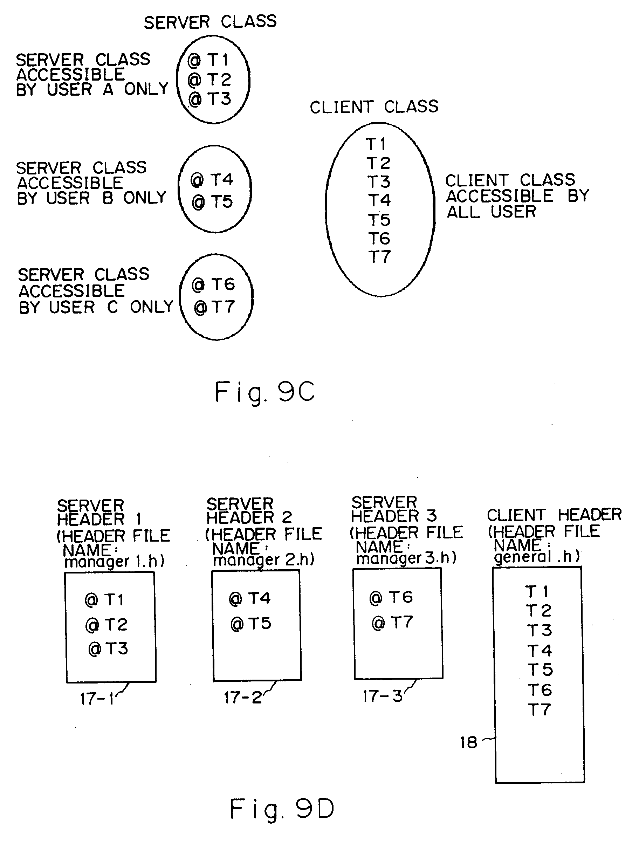

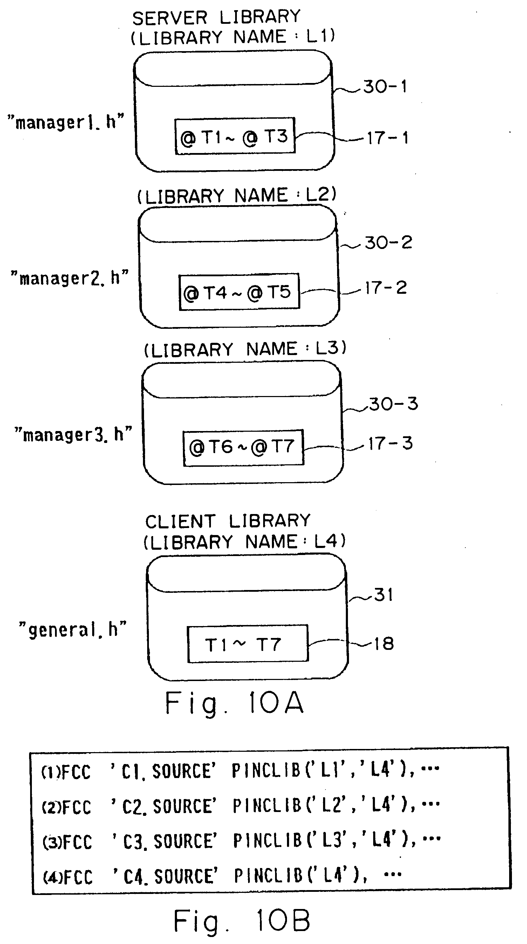

Figure 9 is a view for explaining the access authorization; and Figure 10 is a view for explaining the restriction on the access authorization.

Assuming that, as shown in Figure 9A, plural sets of software being developed by a number of developers A, B, C, ... are conflicting for an interface for the common table 11. In Figure 9A, seven common tables T₁, T₂, T₃, ..., T₇ exist.

In Figure 9A, the arrow indicates the type of access authorization. A solid-line arrow indicates the authorization of defining or updating data items in a common table, and a broken-line arrow indicates the authorization of referring to the data items in the common table.

In the common table 11, developer A manages common tables "T1", "T2", and "T3"; developer B manages common tables "T4" and "T5"; and developer C manages common tables "T6" and "T7". Managing a common table means taking the responsibility for setting values in the common table and being authorized to access and exclusively define the values in the common table. Other developers than A, B, and C are limited to the authorization of only referring to the common table 11.

For example, common tables "T1", "T2", and "T3" are managed by A, and developed by general developers B, C, and others.

Administrator A is permitted to update and refer to common tables "T1", "T2" and "T3". However, general developers B, C, and others are permitted to only refer to common tables "T1", "T2" and "T3".

When the access authorization is determined as shown in Figure 9A, a server class 13 and client class 14 are assigned to each common table 11 as shown in Figure 9B according to the method shown in Figure 5B. For example, common table "T1" assigns server class "@T1" and client class "T1".

Since administrator A manages common tables "T1", "T2", and "T3" as shown in Figure 9A, server classes "@T1", "@T2", and "@T3" for defining or updating common tables "T1", "T2", and "T3" are assigned only to administrator A. Client classes "T1" through "T7" for only referring to common tables "T1", "T2", ..., "T7" are assigned to all developers. To attain this, server and client classes are classified as shown in Figure 9C. Each group of classes is assigned a header file as shown in Figure 9D according to the method shown in Figure 5B. Figure 9D differs from Figure 5B in that a server header is separated into 17-1, 17-2, and 17-3 as shown in Figure 9D according to the access authorization shown in Figure 9A. The server header 17-1, 17-2 and 17-3 in Figure 9D have header file names "manager1.h", "manager2.h" and "manager3.h" respectively. The client header 18 in Figure 9D has a header file name "general.h."

To restrict the access to the generated server classes, general developers must be prohibited from entering the server class of a predetermined common table. This can be attained by creating a header file for storing server classes and setting it open only to an administrator, but closed to general developers.

Since the header file is managed after storing in a library, preventing general developers from entering the server class of a predetermined common table means prohibiting general developers from accessing the server library in which the server header of the server class is stored.

The access control function of the resource managing unit 16 (security function) is used to prohibit general developers from accessing the server library. Also the computer environment is established when the software is developed so that access authorization to set a value in the common table is not given to general developers. Since the technology associated with the data resource security function of the resource managing unit 16 is well known, the detailed explanation about the internal processes involved is omitted here.

In the example shown in Figure 10A, server libraries 30-1, 30-2, and 30-3, that is, the include library for storing each of the server headers 17-1, 17-2, and 17-3, are generated, and a client library 31 for storing the client header 18 is also generated.

In this case, the administrator of the libraries assigns read authorization to user A for server library 30-1, to user B for server library 30-2, and to user C for server library 30-3. The administrator assigns the read authorization to all developers for client library 31.

When a program for the software to be developed is compiled, the information where a header file specified by an include statement in the program is necessary for a compilation. In this case, as shown in Figure 10B, the compile command FCC is entered with an include library containing the header file specified by an include statement in the program.

Then, the compile command FCC includes a header file specified by an include statement in the program from the include library designated in its operand and compiles.

In Figure 10B, (1) shows an example of a compile command inputted by administrator A of common tables "T1" through "T3". In this command, server library L1 and client library L4 are specified in the PINCLIB operand, and a compiling operation is specified for a program in the source file C1.SOURCE. If a developer other than A specifies the compile command indicated by (1), a compiling operation carried out according to the compile command results in an error because the developer is not authorized for reading server library L1.

Likewise, (2) shows an example of a compile command entered by administrator B of common tables "T4" and "T5"; (3) shows an example of a compile command entered by administrator C of common tables "T6" and "T7"; and (4) shows an example of a compile command entered by developers other than A, B, and C.

Since a developer other than the administrators of the common tables is not authorized to read server libraries "L1" through "L3", the developer is prevented from using these server libraries "L1" through "L3" according to the access control function of the resource managing unit 16 when he or she enters one of the compile commands (1) through (3). The developer cannot execute a compiling process using a server header contained in those server libraries.

In the above described embodiment, a server class is associated with the definition or update of each data item in a common table, while a client class is associated with only the reference to each data item. However, a member function for defining or updating a data item which can be defined or updated by general developers may be included in the client class.

A number of developer groups each having a different authorization level for updating or referring to a common table can be provided by generating more than one client or server library and by classifying developers authorized to access each library.

For example, developers are grouped such that those in the first group are authorized to only refer to common tables "T1" through "T4"; those in the second group are authorized to only refer to common tables "T5" through "T7"; and those in the third group are authorized to only refer to all common tables. Administrators are also grouped such that, for example, administrator A is authorized to refer to the common tables accessible to the first group of developers and to update common tables "T1" through "T3"; administrator B is authorized to refer to the common tables accessible to the second group of developers and to update common tables "T4" and "T5"; and administrator C is authorized to refer to the common tables accessible to the third group of developers and to update common tables "T6" through "T7".

In this case, include libraries are grouped, for example, as follows.

First, server library "L1" stores server headers of server classes "@T1" through "@T3".

Next, server library "L2" stores server headers of server classes "@T4" through "@T5".

Also, server library "L3" stores server headers of server classes "@T6" through "@T7".

Further, client library "L4" stores client headers of client classes "T1" through "T4".

Then, client library "L5" stores client headers of client classes "T5" through "T7".

After grouping all the components described above, the developers in the first group are authorized to read client library "L4"; those in the second group are authorized to read client library "L5"; and those in the third group are authorized to read client libraries "L4" and "L5".

Administrator A is authorized to read client library "L4" and server library "L1"; administrator B is authorized to read client library "L5" and server library "L2"; and administrator C is authorized to read client libraries "L4" and "L5" and server library "L3".

Thus, developers and administrators in each group use a compile command to exclusively specify an include library for storing a necessary header for each of them.

In the above described preferred embodiment of the present invention, a class declaration and a member function definition are included in a header file. However, the member function definition can be removed from the header file, or both the class declaration and the member function definition can be removed from the header file.

## Claims

1. A software developing device (10) for developing software using an object-oriented language having a class concept, comprising
class storing means for storing a plurality of classes (13 and 14) for defining and referring to data items in a common table (11) accessed by plural sets of software to be developed (12a and 12b) and a procedure of accessing said data items, each of said classes being provided according to the type of said data items and the type of said accessing procedure,
including means (15) for including in said software to be developed (12a and 12b) said classes (13 and 14) stored in said class storing means, and
managing means (16 and 19) for permitting said software to be developed (12a and 12b) to include during the including operation only classes which said software is authorized to access among said classes (13 and 14) stored in said class storing means.

2. The software developing device (10) according to Claim 1, wherein
said accessing procedure is a function procedure for defining or updating the data items in said common table (11), or a function procedure for referring to the data items in said common table (11).

3. The software developing device (10) according to Claim 1, wherein
said managing means (16 and 19) permits a user to include only classes which said user is authorized to access according to the identification information about users who develop said software (12a and 12b) to be developed.

4. The software developing device (10) according to Claim 1, wherein
said classes (13 and 14) are classified into a plurality of groups based on said access authorization, each of said groups being provided with header files (17 and 18), and each header file being stored in said class storing means,
said including means (15) includes said header files (17 and 18) stored by said class storing means in said software to be developed (12a and 12b) during the compilation of said software to be developed (12a and 12b), and
said managing means (16 and 19) permits said software to be developed (12a and 12b) to include only said header files (17 and 18) which said software is authorized to access among said header files (17 and 18) stored by said class storing means.

5. The software developing device (10) according to Claim 4, wherein
said managing means (16 and 19) permits a user to include only header files which said user is authorized to access according to the identification information about users who develop said software (12a and 12b) to be developed.

6. The software developing device (10) according to Claim 1, wherein
said classes (13 and 14) are classified into a plurality of groups based on said access authorization, each of said groups being provided with header files (17 and 18), each of said header files is provided with library files (30 and 31), and each library file being stored in said class storing means,
said including means (15) includes said header files (17 and 18) in said library files (30 and 31) stored by said class storing means in said software to be developed (12a and 12b) during the compilation of said software to be developed (12a and 12b), and
said managing means (16 and 19) permits said software to be developed (12a and 12b) to include only said header files (17 and 18) in said library files which said software is authorized to access among said library files (30 and 31) stored by said class storing means.

7. The software developing device (10) according to Claim 6, wherein
said managing means (16 and 19) permits a user to include only header files (17 and 18) in said library files (30 and 31) which said user is authorized to access according to the identification information about users who develop said software (12a and 12b) to be developed.

8. A software developing device (10) for developing software using an object-oriented language having a class concept, comprising
class storing means for storing a plurality of classes (13 and 14) for defining and referring to data items in a common table (11) accessed by plural sets of software to be developed (12a and 12b) and a procedure of accessing said data items, each of said classes being provided according to the type of said data items and the type of said accessing procedure,
including means (15) for including in said software to be developed (12a and 12b) said classes (13 and 14) stored in said class storing means, and
managing means (16 and 19) for publishing only classes which said software to be developed (12a and 12b) is authorized to access among said classes (13 and 14) stored in said class storing means, and for permitting only said classes to be included during the including operation.

9. A software developing method of developing software using an object-oriented language having a class concept, comprising the steps of
defining a plurality of classes (13 and 14) for defining and referring to data items in a common table (11) accessed by plural sets of software to be developed (12a and 12b) and a procedure of accessing said data items, each of said classes being provided according to the type of said data items and the type of said accessing procedure,
including in said software to be developed (12a and 12b) said classes (13 and 14), and
permitting said software to be developed (12a and 12b) to include during the including operation only classes which said software is authorized to access among said classes (13 and 14) stored in said class storing means.

10. A software developing method of developing software using an object-oriented language having a class concept, comprising the steps of
defining a plurality of classes (13 and 14) for defining and referring to data items in a common table (11) accessed by plural sets of software to be developed (12a and 12b) and a procedure of accessing said data items, each of said classes being provided according to the type of said data items and the type of said accessing procedure,
including in said software to be developed (12a and 12b) said classes (13 and 14), and
publishing only classes which said software to be developed (12a and 12b) is authorized to access among said classes (13 and 14), and for permitting only said classes to be included during the including operation.

11. A software developing device (10) for developing software (12a and 12b) using an object-oriented language having a class concept and provided with a resource managing means (16) having a security function for the data resources of a computer system, comprising:
a server class (13) for defining the values in a common table (11) shared by plural sets of software to be developed,
a client class (14) for referring to values in said common table defined by said server class,
a server header (17) for covering said server classes selectively included in the software to be developed, and
a client header (18) for covering said client classes selectively included in the software to be developed, wherein
software not authorized to access a common table is prohibited from invalidly including said server class or client class by managing through said resource managing means data resources containing said server header or said client header.

12. A software developing method for developing software (12a and 12b) by a software developing device (10) using an object-oriented language having a class concept, comprising the steps of:
separately creating a server class (13) for defining the value in a common table (11) used by plural sets of software to be developed and a client class (14) for referring to the value defined by said server class,
classifying said server classes and said client classes according to the access authorization level for defining or referring to a value whichever is necessary in said common table, and assigning to each group a server header (17) and a client header (18), and
setting said server header and said client header to "open" or "closed" for each set of software.

13. A software developing method for developing software (12a and 12b) using an object-oriented language having a class concept by a software developing device (10) provided with a resource managing means (16) having a security function for the data resources of a computer system, comprising the steps of:
separately creating a server class (13) for defining the values in a common table (11) used by plural sets of software to be developed and a client class (14) for referring to the values defined by said server class,
permitting software to be developed and authorized to define the values in said common table to include said server class by managing through said resource managing means the data resources containing said server header (17) covering said server classes, and
permitting software to be developed and authorized to refer to the values in said common table to include said client class by managing through said resource managing means the data resources containing said client header (18) covering said client classes.
